# EUROPÄISCHE PATENTANMELDUNG

(11) **EP 0 565 890 A2**
(43) Veröffentlichungstag der Anmeldung: **20.10.1993**
(21) Anmeldenummer: 93104361.6
(22) Anmeldetag: 17.03.1993
(51) Int. Cl.: H04J 3/07, H04J 3/16, H04L 25/14

(54) **Verfahren und Anordnung zur Übertragung eines Digitalsignals in einem VC-12-Container über Übertragungskanäle**

(30) Priorität: 16.04.1992 DE 4212856
(71) Anmelder: SIEMENS AKTIENGESELLSCHAFT, D-80333 München (DE)
(72) Erfinder: Müller, Horst, Dipl.-Ing., W-8021 Hohenschäftlarn (DE)

(57) **Zusammenfassung**

Bei diesem Verfahren wird ein Digitalsignal (DS) in einen VC-12-Container (VC-12) eingefügt, wobei Unterschiede in den Datenraten durch Stopfen ausgeglichen werden. Die Containerdaten (VC-D) werden in drei Teilsignale (TS1, TS2, TS3) aufgeteilt und in jeweils einen HDSL-Pulsrahmen (HPR1, HPR2, HPR3) eingefügt. Die restlichen freien Zeitschlitze in dem HDSL-Pulsrahmen werden durch feste Stopfbits (R1, R2,...) oder/und Zusatzinformation (ZI) belegt. Die so ergänzten Teilsignale (TS1, TS2, TS3) werden über drei HDSL-Datenkanäle (L1, L2, L3) übertragen und empfangsseitig in einen VC-12-Container eingefügt, der in einen synchronen Transportmodul (STM-N) übertragen wird.

## Beschreibung

Die Erfindung betrifft ein Verfahren zur Übertragung eines Digitalsignals in einem VC-12-Container über Übertragungskanäle geringer Übertragungskapazität.

In dem digitalen Übertragungsnetz der "synchronen Digital-Hierarchie" (SDH) nach den CCITT-Empfehlungen G.707, G.708 und G.709 werden die zu übertragenden Digitalsignale in spezielle Funktionsblöcke, sogenannte synchrone Container eingefügt, wobei Unterschiede in den Transferdatenraten durch Stopfen ausgeglichen werden. Jeder Container wird durch Hinzufügen einer Kopfinformation (POH) zu einem virtuellen Container ergänzt. Die virtuellen Container werden periodisch übertragen. Ein virtueller Container bildet mit einem ihm zugeordneten Pointer eine "Tributary Unit". Die Lage des ersten Bytes des virtuellen Containers wird durch diesen Pointer angegeben. Mehrere "Tributary Units" gleichen Aufbaus können wieder zu einer "Tributary Unit Group" zusammengefaßt werden und in einen virtuellen Container höherer Ordnung eingefügt als "Administrative Unit" übertragen oder in einen synchronen Transportmodul eingefügt werden. Die prinzipielle Multiplexstruktur des synchronen Verbindungsnetzes ist in dem CCITT-Blue Book, Vol. III-fascicle III.4 1989, Seite 122 dargestellt. Ein 2,048 Mbit/s-Signal soll nun zwischen Teilnehmern über das synchrone Verbindungsnetz übertragen werden. Die Teilnehmer sind jedoch lediglich über die für Telefongespräche vorgesehenen Leitungspaare angeschlossen.

Aus dem Technical Report des Committee T1-Telecommunication Feb. 14, 1992, R.C.McConnell, Editor, Bellcore Morristown, NJ 07962-1910 USA, 201-829-4194 sind Methoden beschrieben, die es gestatten bis zu ca. 800 kbit/s über diese Leitungen zu übertragen. Die Daten werden in einen HDSL-Pulsrahmen eingefügt, der 4704 Bits ± 2 Stopfbits umfaßt. Zur Übertrauung werden die binären Daten in quaternäre Daten umgesetzt und empfangsseitig in binäre Signale rückumgesetzt.

Das Problem der Übertragung eines Digitalsignals über Datenkanäle geringer Übertragungskapazität wird durch das im Anspruch 1 angegebene Verfahren gelöst.

Eine Anordnung zur Durchführung des Verfahrens ist im unabhängigen Anspruch angegeben.

Vorteilhafte Weiterbildungen der Erfindung sind in den Unteransprüchen angegeben.

Vorteilhaft ist die Möglichkeit, die für HDSL-Systeme entwickelte Bausteine bei der Realisation einsetzen zu können. Als Datenkanäle können die üblichen zur Übertragung von Telefongesprächen verwendeten Leitungspaare benutzt werden. Drei dieser Leitungspaare sind ausreichend, um ein Digitalsignal von 2,048 Mbit/s in einem CV-12-Container zu übertragen. Das Digitalsignal wird in die CCITT-Empfehlungen entsprechenden virtuellen Container eingefügt. Hierdurch ist volle Kompatibilität mit dem synchronen Verbindungnetz gewährleistet, so daß die in diesem Netz üblichen Prozeduren sowie die Überwachung der Verbindungswege erfolgen können.

Der Taktgenerator der Leitungsabschluß-Einrichtungen (Network Termination NT) wird von dem Master-Taktgenerator der Netzanschluß-Einrichtung (Line Terminator LT) durch die übertragenen HDSL-Signale synchronisiert, so daß die von dessen Taktsignal gesteuerten ausgesendeten Daten ebenfalls langzeitsynchron sind. Dadurch werden in der nachfolgenden Tributary Unit weniger Pointeroperationen zur Anpassung der Datenraten erforderlich.

Es ist zweckmäßig, daß die Containerdaten bit- oder byteweise durch Demultiplexen auf die drei Teilsignale und damit auf die drei Datenkanäle aufgeteilt werden. Hierdurch sind nur kleine Zwischenspeicher erforderlich.

Vorteilhaft ist es, daß zu Beginn jedes HDSL-Pulsrahmens eines vorgegebenen Datenkanals stets das erste Bit oder das erste Byte eines Containers angeordnet wird. Hierdurch ist eine einfache Zuordnung der übertragenen Daten zu den Containerdaten und somit deren erneutes Einfügen in einen Container möglich.

Es kann ebenfalls zweckmäßig sein, den Container um mehrere Füllbits oder um ein Füllbyte zu ergänzen, so daß beim Demultiplexen der Containerdaten stets das 1, 4, 7, ... bzw. 2, 5, 8, ... oder 3, 6, 9, .. . Bit oder Byte in demselben Pulsrahmen im selben Datenkanal übertragen wird.

Vorteilhaft ist es, die feste Stopfinformation möglichst gleichmäßig in den HDSL-Pulsrahmen einzufügen, da hierdurch nur eine mimimale Zwischenspeicherung der zu übertragenen bzw. empfangenen Daten erforderlich ist.

Bei der Anordnung kann auf bereits bekannte und vorhandene Schaltungen und Bausteine zurückgegriffen werden. Die Mittel zum Einfügen des Datensignals, zur Realisation der Container, die ja Pulsrahmen entsprechen, zur Taktanpassung, zur Datenüberwachung usw. sind aus den Baugruppen der synchronen Digitalhierarchie (SDH) bekannt. Ebenso sind Methoden und Bausteine für die "High-Bit-Rate Digital Subscriber Line" entwickelt worden , die es gestatten, über die für Telefongespräche genutzten Leitungspaare Digitalsignale mit hoher Geschwindigkeit zu übertragen. Neu anzugeben sind Mittel zum Demultiplexen der Containerdaten und zu deren Einfügen in vorgegebene Zeitschlitze des HDSL-Pulsrahmens und in der Gegenrichtung ebenfalls zum Einfügen der Containerdaten als Teilsignale in die HDSL-Pulsrahmen und zum Rückgewinnen des Digitalsignals.

Die Erfindung wird anhand von Figuren näher erläutert.

Es zeigen:
- Fig. 1: einen Netzaufbau zur Übertragung eines VC-12-Signals,
- Fig. 2: das Prinzipschaltbild einer Leitungsanschluß-Einrichtung LT und einer Netzabschluß-Einrichtung NT,
- Fig. 3: ein Zeitdiagramm mit HDSL-Pulsrahmen und
- Fig. 4: eine Variante zur Belegung des HDSL-Pulsrahmens.

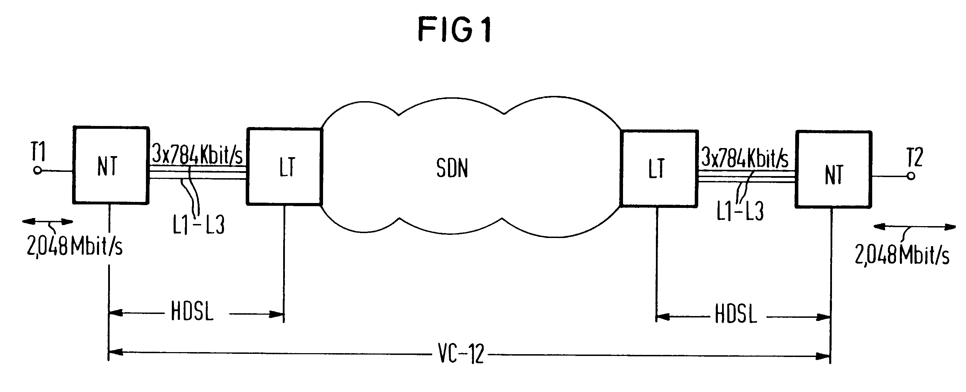

In Figur 1 ist das synchrone digitale Verbindungsnetz SDN schematisch dargestellt. Über jeweils eine Leitungsabschluß-Einheit LT (Line Termination) und eine Netzabschluß-Einrichtung NT (Network Termination) sind ein erster Teilnehmer T1 und ein zweiter Teilnehmer T2 - stellvertretend für eine Vielzahl von Teilnehmern - angeschaltet. Die Verbindung zwischen der Netzabschluß-Einrichtung NT und der Leitungsanschluß-Einrichtung LT erfolgt über drei Duplex-Datenkanäle mit jeweils einer Übertragungsrate von jeweils 784 kbit/s. Diese Übertragungskanäle werden jeweils durch ein Leitungspaar gebildet. Die Erfindung betrifft die mit HDSL bezeichnete Übertragungsstrecke zwischen Netzabschluß-Einrichtung und Leitungsanschluß-Einrichtung.

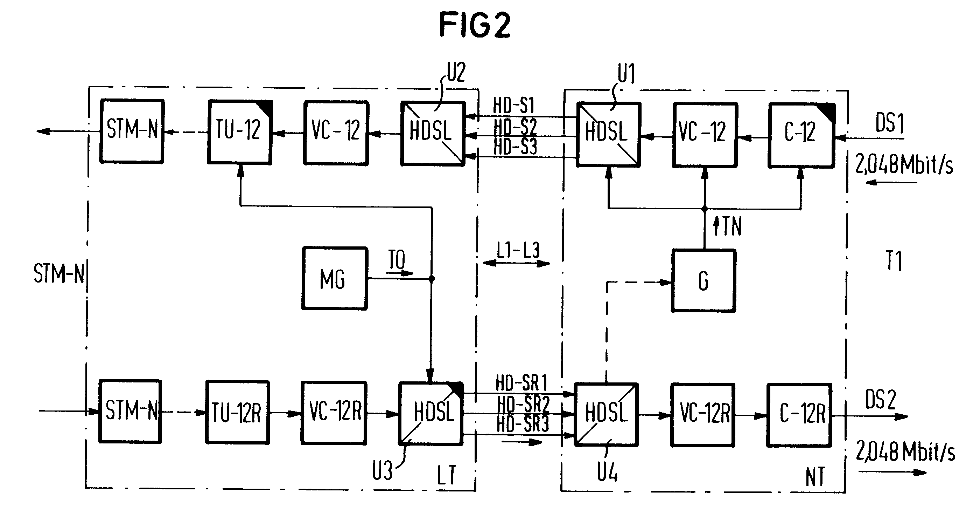

In Figur 2 sind die Leitungsanschluß-Einrichtung LT und die Netzabschluß-Einrichtung NT als Prinzipschaltbilder dargestellt.

Zunächst soll die Netzabschluß-Einrichtung NT, an die jeweils ein Teilnehmer T1, T2 angeschaltet ist, näher erläutert werden.

Die Netzabschluß-Einrichtung enthält Mittel zum Einfügen des Digitalsignals DS1 in einen virtuellen Container VC-12, einen ersten Umsetzer U1 zum Umsetzen der VC-12-Containerdaten in Teilsignale und deren Übertragung mit HDSL-Signalen, einen Taktgenerator G zur Steuerung des Verfahrens und für die Empfangsrichtung einen vierten Umsetzer U4 zur Umsetzung der mit den HDSL-Signalen übertragenen Teilsignale in das Datenformat von virtuellen Containern VC-12R und zur Ausgabe eines zweiten Digitalsignals DS2.

Der Teilnehmer T1 will das Digitalsignal DS1, das eine Bitrate von 2,048 Mbit/s aufweist, über das synchrone Verbindungsnetz SDN übertragen. Das Digitalsignal DS1 kann hierbei wiederum aus mehreren Signalen zusammengesetzt sein. In der Netzabschluß-Einrichtung wird das Digitalsignal DS1 in bekannter Weise in einen virtuellen Container VC-12 eingefügt. In der schematischen Darstellung nach Figur 2 erfolgt dies in zwei Stufen. Zunächst wird das Digitalsignal DS1 in den Container C-12 eingefügt. Der Pulsrahmen des Containers C-12 wird hierbei durch ein von Taktgenerator G erzeugtes Taktsignal TN gebildet. Unterschiede zwischen der Datenrate des Digitalsignals DS1 und der Übertragungskapazität des Containers C-12 werden durch Stopfen ausgeglichen. Der Container wird mit einem Kopfteil (path overhead POH) versehen, und die gesamten VC-12-Containerdaten VC-D (diese beinhalten sämtliche in einem virtuellen Container übertragenen Daten - deren Information Daten im engeren Sinn, Texte, Sprache usw. umfassen kann - und sämtliche für den Rahmenaufbau und das Stopfen vorgesehene Bits) wird in drei Teilsignale TS1 bis TS3 aufgeteilt, in drei HDSL-Pulsrahmen eingefügt und über Datenkanäle L1 bis L3 als Teil der HDSL-Signale HD-S1 bis HD-S3 ausgesendet.

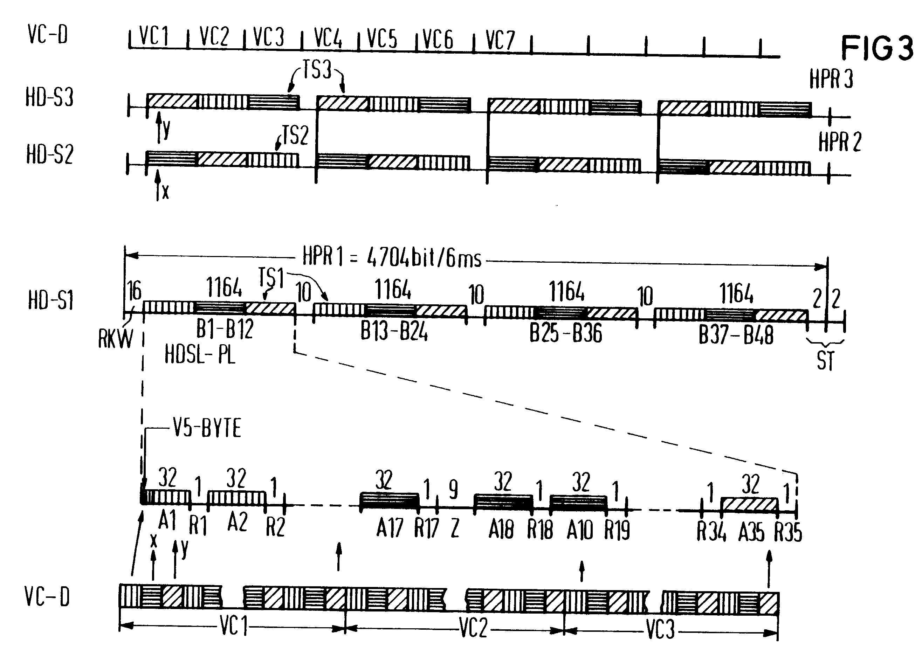

Die Umsetzung der 140 Bytes umfassenden Containerdaten VC-D in drei Teilsignale TS1 bis TS3 erfolgt durch Demultiplexen. Anhand des in Fig. 3 dargestellten Zeitdiagramms soll die Übertragung der Teilsignale näher erläutert werden. In der obersten Zeile sind die zu übertragenden virtuellen VC-12-Container dargestellt. Aus Platzgründen sind sie nur mit VC1, VC2, VC3, ... bezeichnet. Da in jedem Übertragungskanal nur ca. 1/3 der für die Containerdaten benötigten Übertragungskapazität zur Verfügung steht, muß die Übertragung über mehrere parallele Kanäle erfolgen. Die Containerdaten werden daher zunächst in drei Teilsignale TS1 bis TS3 zerlegt. Zwar ist es möglich, auch aufeinanderfolgende ganze Container diesen Teilsignalen zuzuordnen, jedoch ist dann ein beträchtlicher Speicheraufwand erforderlich und außerdem bedingt dieses Vorgehen erhebliche Laufzeiten. Deshalb ist es vorzuziehen, die VC-12-Containerdaten byteweise oder sogar bitweise auf die drei Übertragungskanäle aufzuteilen, d.h. in die zur Übertragung von Nutzinformation vorgesehenen Zeitschlitze HDSL-PL (Paylod) einzufügen.

In der Darstellung nach Figur 3 wird von einem byteweisen Multiplexen ausgegangen. Das erste Byte V5 des ersten virtuellen VC-12-Containers VC1 wird unmittelbar nach dem Rahmen Kennungswort RKW in den ersten HDSL-Pulsrahmen HPR1 eingefügt. Das zweite Byte wird an derselben Position des zweiten HDSL-Pulsrahmens HPR2 und das dritte Byte an entsprechenden Stelle des dritten HDSL-Pulsrahmens HPR3 eingefügt.

Hierzu müssen die VC-12-Containerdaten entweder um zwei Bytes verzögert werden (dies ist ohnehin wegen des Rahmenkennungswortes erforderlich) oder die Pulsrahmen HPR2 und HPR3 müssen jeweils um ein Byte verzögert werden. Anschließend wird zunächst jedes erste, zweite und dritte Byte usw. als Bestandteil der Teilsignale TS1 bis TS3 in die HDSL-Pulsrahmen HPR1 bis HPR3 eingefügt.

Ein Abschnitt HDSL-P aus dem HDSL-Pulsrahmen HPR1, der zur Übertragung von Nutzinformation (Payload) dient, ist in Figur 3 gesondert herausgezeichnet. In diesen 1164 Bits umfassenden Bereich B1-B12 müssen die VC-12-Containerdaten, die 1120 Bits umfassen, eingefügt werden. Da jedoch 1164 Bits zur Verfügung stehen, wird jeweils nach 32 Bits Nutzdaten (4 Bytes) ein Bit einer feststehenden Stopfinformation (fixed stuff bit) R1, R2, R3, ... eingefügt. Nach dem 17. "fixed stuff bit" sind neun Zeitschlitze zur Übertragung von 9 Bits Zusatzinformation ZI vorgesehen. Hiervon können zwei Bits zur Kennzeichnung der drei Teilsignale verwendet werden.

Da die Anzahl der 140 Containerbytes nicht durch drei teilbar ist, kommt es zu einer Verschiebung der ersten Bytes in ein anderes Teilsignal jeweils nach der Übertragung eines VC-12-Containers. Jedem ersten, zweiten und dritten Byte ist in Figur 3 eine bestimmte Schraffur zugeordnet. Es ist jedoch stets sichergestellt, daß das erste Byte V5 (bzw. Bit) des ersten Teilsignals TS1 im Pulsrahmen eines vorgegebenen Duplexkanals, vorzugsweise in den Pulsrahmen HPR1 des ersten Übertragungskanals L1, stets unmittelbar nach dem Rahmenkennungswort RKW eingefügt wird.

Die Darstellung im Zeitdiagramm ist nicht maßstabgerecht, damit auch einzelne Bits sichtbar sind.

Bevor auf weitere Möglichkeiten der Aufteilung der Containerdaten VC-D eingegangen wird, soll zunächst aber die Funktionsweise der Leitungsanschluß-Einrichtung LT anhand von Figur 2 weiter erläutert werden.

Die Leitungsanschluß-Einrichtung enthält einen zweiten Umsetzer U2 zur Rückumsetzung der HDSL-Daten in Teilsignale, Mittel zum Einfügen dieser Signale in einen virtuellen Container VC-12, zur Bildung von Tributary-Units TU-12 und zum Einfügen in synchrone Transportmodule STM-N. Alle diese Begriffe beinhalten wieder einen bestimmten Pulsrahmenaufbau. Außerdem ist ein Master-Taktgenerator MG vorhanden und die entsprechenden Mittel zur Umsetzung der Containerdaten eines in synchronen Transportmodulen enthaltenen virtuellen VC-12R-Containern in drei Teilsignale und deren Übertragung im Rahmen der HDSL-Signale. Hierzu ist ein dritter Umsetzer U3 vorgesehen.

Die das erste Digitalsignal DS1 als Nutzinformation beinhaltenden Teilsignale TS1 bis TS3 werden im Rahmen der HDSL-Signale HD-S1 bis HD-S3 zur Leitungsanschluß-Einrichtung LT übertragen und dort in einer zweiten Umsetzereinrichtung U2 in binäre Daten umgesetzt, wieder in einen virtuellen VC-12-Container (d.h. in einen entsprechenden Pulsrahmen) eingefügt und mit einem Pointer versehen zu einer Tributary Unit TU-12 ergänzt. Durch die Pointeraktivität erfolgt eine Anpassung der empfangenen Daten an das von dem Master-Taktgenerator MG, der auch seinerseits wieder synchronisiert wird, erzeugte Taktsignal TO. Die Tributary Unit TU-12 wird in einen synchronen Transportmodul STM-N eingefügt, der über das synchrone Verbindungsnetz SDN übertragen wird.

Die Übertragungskanäle sind als Duplex-Kanäle durch jeweils ein Leitungspaar realisiert, so daß in der Gegenrichtung die Übertragung eines zweiten Datensignals DS2 über dieselben drei Leitungspaare der Übertragungskanäle L1 bis L3 erfolgt. Es werden quaternäre Signale übertragen.

In der Leitungsanschluß-Einrichtung LT werden in der Rückrichtung die ein zweites Digitalsignal DS2 enthaltenden virtuellen VC-12R-Container in derselben Weise in drei Teilsignale zerlegt und in HDSL-Pulsrahmen eingefügt mit den entsprechenden HDSL-Signalen HD-SR1 bis HD-SR3 (R für Rückrichtung) von der Leitungsanschluß-Einrichtung LT zur Netzabschluß-Einrichtung NT übertragen.

Die Anpassung der VC-12R-Containerdaten der virtuellen Container VC-12R an das Taktsignal TO des Master-Taktgenerators MG erfolgt wiederum durch Stopfen. Hierbei wird der HDSL-Pulsrahmen erforderlichenfalls um bis zu zwei Stopfbits ST (Fig. 3) verkürzt oder verlängert.

Das Einfügen der in Teilsignale zerlegten VC-12R-Containerdaten in die HDSL-Pulsrahmen erfolgt wieder in der bereits beschriebenen Weise.

In der Netzabschluß-Einrichtung werden aus den empfangenen HDSL-Signalen HD-SR1 bis HD-SR3 die Teilsignale in virtuelle Container VC-12R eingefügt. Deren Nutzinformation wird als Digitalsignal DS2, das eine konstante Datenrate aufweist, dem ersten Teilnehmer T1 zugeführt.

Aus den empfangenen HDSL-Signalen HD-SR1 bis HD-SR3 wird außerdem ein Signal zur Synchronisierung des Taktgenerators G gewonnen, so daß sämtliche übertragenen Daten - langzeitmäßig betrachtet - zueinander synchron sind.

In der Leitungsanschluß-Einrichtung LT werden kurzzeitige Phasen- oder Frequenzunterschiede zwischen den von der Netzabschluß-Einrichtung NT empfangenen VC-12-Containern und dem Master-Taktsignal TO, bzw. den Datenraten, durch Pointeraktivitäten beim Einfügen der virtuellen Container VC-12 in die Tributary Unit TU-12 aufgefangen.

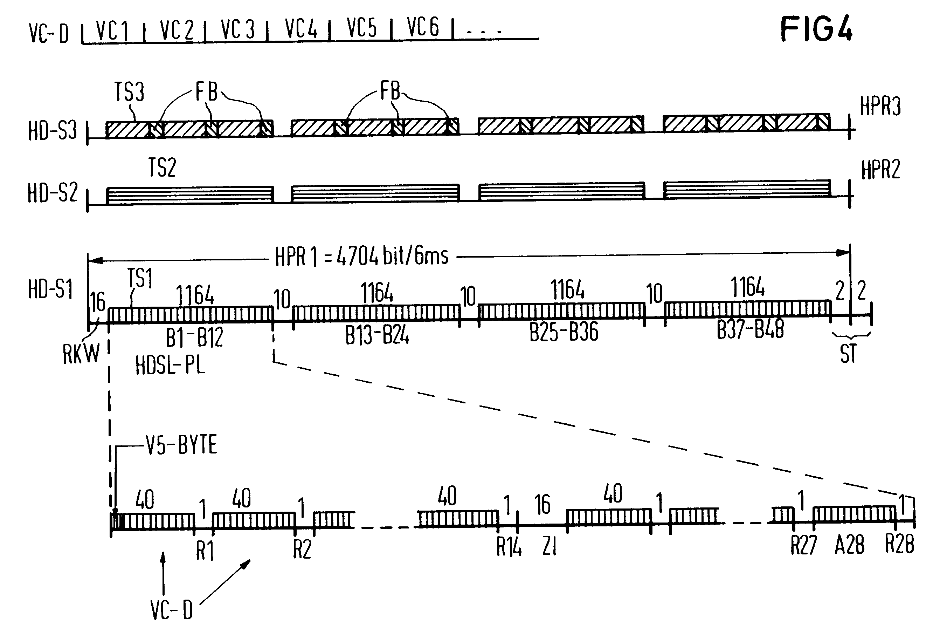

In Figur 4 ist eine weitere Variante zur Aufteilung der Nutzübertragungskapazität des HDSL-Pulsrahmens dargestellt. Der virtuelle VC-12-Container wird hierzu um ein Füllbyte FB ergänzt. Anschließend erfolgt ein byteweises Multiplexen und Einfügen in die drei HDSL-Pulsrahmen. Jeweils nach 40 Bits wird ein festes Stopfbit ("fixed stuff bit") R1, R2, R3, ... eingefügt. Als Zusatzinformation ZI stehen 16 Bits zur Verfügung, die beispielsweise nach dem 14. festen Stopfbit R14 eingefügt werden. Bei dieser Art der Aufteilung wird jeweils das erste, vierte, siebte, ... Byte der Containerdaten in den Pulsrahmen HPR1 des ersten Datenkanals eingefügt, jedes zweite, fünfte, achte .. Byte in den Pulsrahmen HPR2 und jedes dritte, sechste, neunte Byte im Pulsrahmen HPR3 des dritten Datenkanals. In dem dritten Pulsrahmen HPR3 werden zusätzlich die Füllbits FB übertragen, die natürlich auch zur Übertragung interner Information dienen können. Bei bitweisem Demultiplexen genügt es, zwei Füllbits als Ergänzung hinzuzufügen. Die Anzahl der Containerdatenbits wird hierdurch durch drei teilbar und kann so in entsprechender Weise auf die drei HDSL-Pulsrahmen verteilt werden. In entsprechender Weise werden die 2, 5, 7, ... bzw. 3, 6, 9, Bytes (oder Bits) in die weiteren HDSL-Pulsrahmen HPR2 und HPR3 eingefügt.

## Patentansprüche

1. Verfahren zur Übertragung eines Digitalsignals (DS1) in einem VC-12-Container (VC-12) über Übertragungskanäle (L1, L2, L3) geringerer Übertragungskapazität, bei dem das Digitalsignal (DS1) in VC-12-Container (VC-12) eingefügt wird und hierbei eine Anpassung der Transferdatenraten durch Stopfen durchgeführt wird,
die gesamten VC-12-Containerdaten (VC-D) durch Demultiplexen in drei Teilsignale (TS1, TS2, TS3) aufgeteilt und in jeweils einen HDSL-Pulsrahmen (HPR1 bis HPR3) eingefügt wird,
die restlichen freien Zeitschlitze der HDSL-Pulsrahmen (HPR1 bis HPR3) durch feste Stopfbits (R1, R2, ...) Zusatzinformation (ZI) belegt werden,
die so zu HDSL-Signalen (HD-S1 bis HD-S3) ergänzten Teilsignale (TS1, TS2, TS3) über drei HDSL-Übertragungskanäle (L1, L2, L3) übertragen werden und
die Teilsignale (TS1, TS2, TS3) empfangsseitig in VC-12-Container (VC-12) eingefügt und über das synchrone Digitalnetz (SDN) übertragen werden und in der Gegenrichtung im Rahmen der HDSL-Signale (HD-SR1, HD-SR2, HD-SR3) übertragene Teilsignale in virtuelle Container VC-12R umsetzt,
deren Containerdaten in ein zweites Digitalsignal (DS2) rückumgesetzt werden.

2. Verfahren nach Anspruch 1,
**dadurch gekennzeichnet,**
daß in einer Leitungs-Anschlußeinrichtung (LT) die Anpassung der Datenrate der empfangenen VC-12-Container (VC-12) an ein eigenes Master-Taktsignal (TO) durch Hinzufügen eines Pointers und dessen Aktivitäten erfolgt, und
daß in die Anpassung der Datenrate eines auszusendenden VC-12 Containers (VC-12R) an die Transferdatenrate der vom Master-Taktsignal (TO) gesteuerten HDSL-Pulsrahmen (HPR1 bis HPR3) durch Stopfen erfolgt,
und daß in einer Netzabschluß-Einrichtung (NT) durch die empfangenen HDSL-Pulssignale (HD-SR1, HS-SR2, HD-SR3) ein Taktsignal (TN) synchronisiert wird, das die Bildung der virtuellen VC-12-Container (VC-12) und die für die Aussendung der Teilsignale (TS1 bis TS3) verwendeten HDSL-Pulsrahmen (HPR1 bis HPR3) steuert.

3. Verfahren nach Anspruch 2,
**dadurch gekennzeichnet,**
daß die VC-12-Containerdaten (VC-D) bit- oder byteweise in die drei Teilsignale (TS1, TS2, TS3) aufgeteilt werden.

4. Verfahren nach Anspruch 3,
**dadurch gekennzeichnet,**
daß zu Beginn eines einem der Datenkanäle (L1) zugeordneten HDSL-Pulsrahmens (HPR1) stets das erste Bit oder Byte (V5) eines VC-12-Containers (VC-12) angeordnet ist.

5. Verfahren nach Anspruch 4,
**dadurch gekennzeichnet,**
daß die VC-12-Containerdaten (VC-D) um Füllbits oder Füllbytes (FB) derart ergänzt werden, daß die Anzahl ihrer Bits bzw. Bytes durch drei teilbar ist, so daß jeweils die 1, 4, 7, ... bzw. 2, 5, 8, ... bzw. 3, 6, 9, ...ten Bits oder Bytes der VC-12-Containerdaten (VC-D) in denselben HDSL-Pulsrahmen (HPR1, HPR2, HPR3) eingefügt über denselben Übertragungskanal (L1, L2, L3) übertragen werden.

6. Verfahren nach einem der vorhergehenden Ansprüche,
**dadurch gekennzeichnet,**
daß innerhalb eines HDSL-Pulsrahmens (HPR1, HPR2, HPR3) die feste Stopfinformation (R1, R2, ...) möglichst gleichmäßig in die Teilsignale (TS1, TS2, TS3) eingefügt wird.

7. Verfahren nach Anspruch 4,
**dadurch gekennzeichnet,**
daß für jeden von vier Nutzinformationsbereichen (B1-B12, B13-B24, B25-B36, B37-B48) eines HDSL-Pulsrahmens (HPR1) 35 Bits an fester Stopfinformation (R1, R2, ...) und 9 Bits an Zusatzinformation (ZI) vorgesehen sind.

8. Verfahren nach Anspruch 7,
**dadurch gekennzeichnet,**
daß nach jeweils 32 Bits eines Teilsignals (TS1) der Containerdaten (VC-D) ein festes Stopfbit (R1, R2, ...) eingefügt wird
und daß nach dem 17. festen Stopfbit eines der Nutzinformationsbereiche (B1-B12) des HDSL-Pulsrahmens (HPR1) die Zusatzinformation (ZI) eingefügt wird.

9. Verfahren nach Anspruch 5,
**dadurch gekennzeichnet,**
daß ein Füllbyte (FB) oder 2 Füllbits zu den VC-12-Containerdaten (CV-D) bei der Aufteilung in Teilsignale (TS1, TS2, TS3) hinzugefügt werden.

10. Verfahren nach Anspruch 9,
**dadurch gekennzeichnet,**
daß nach jeweils 40 Bits eines Teilsignals (TS1) der VC-12-Containerdaten (VC-D) ein festes Stopfbit (R1, R2, ...) eingefügt wird.

11. Anordnung zur Übertragung eines Digitalsignals (DS1) in VC-12 Containern (VC-12)
mit einer Netzanschluß-Einrichtung (NT),
die Mittel zum Einfügen des Digitalsignals (DS1) in einen VC-12-Container (VC-12) und zur Anpassung der Datenrate des Digitalsignals (DS1) an die Übertragungsrate des VC-12-Containers (VC-12) durch Stopfen aufweist,
die Mittel (U1) zum Demultiplexen der VC-12-Containerdaten (VC-D) in drei Teilsignale (TS1, TS2, TS3), zu deren Einfügen in drei HDSL-Pulsrahmen (HPR1, HPR2, HPR3) und zum Übertragen von HDSL-Signalen (HDS1, HDS2, HDS3) aufweist,
die außerdem Mittel (U4) zum Umsetzen von empfangenen HDSL-Signalen (HD-SR1, HD-SR2, HD-SR3), zum Einfügen der darin enthaltenen Teilsignale (TS1, TS2, TS3) in VC-12-Container (VC-12R) und zur Ausgabe des darin enthaltenen zweiten Digitalsignals (DS2) aufweist,
und die einen Taktgenerator (G) aufweist, der durch die empfangenen HDSL-Signale (HD-SR1, HD-SR2, HD-SR3) synchronisiert wird,
und mit einer Leitungsanschluß-Einrichtung (LT),
die Mittel (U2) zur Rückumsetzung der empfangenen HDSL-Signale (HD-S1, HD-S2, HD-S3) in Teilsignale (TS1, TS2, TS3) und deren Einfügen in VC-12-Container (VC-12) sowie Mittel zur Bildung von Tributary-Units (TU-12) aufweist,
die außerdem Mittel (U3) zur Umsetzung von in der Gegenrichtung zu übertragenden das zweite Digitalsignal (DS2) enthaltenen VC-12-Containern (VC-12R) in HDSL-Signale (HD-SR1, HD-SR2, HD-SR3) aufweist und
die einen Master-Taktgenerator (MG) aufweist, der die Taktrate der Tributary-Units (TU-12) festlegt und
die Mittel zur Anpassung der Datenraten der in der Rückrichtung zu übertragenden VC-12R-Containerdaten an die Datenraten der zu übertragenen HD-SLR-Signale (HD-SR1, HD-SR2, HD-SR3) durch Stopfen steuert.

12. Anordnung nach Anspruch 10,
**dadurch gekennzeichnet,**
daß als Datenkanäle (L1, L2, L3) zur Übertragung der HDSL-Signale (HD-S1, HD-S2, HD-S3; HD-SR1, HD-SR2, HD-SR3) im Duplexbetrieb drei Leitungspaare vorgesehen sind.
